(19) **Europäisches Patentamt / European Patent Office / Office européen des brevets**

(11) **EP 1 508 844 B1**

(12) **FASCICULE DE BREVET EUROPEEN**

(45) Date de publication et mention
de la délivrance du brevet:
**17.10.2007 Bulletin 2007/42**

(51) Int Cl.:
*G05B 19/40* (2006.01)    *G05B 19/42* (2006.01)
*E06B 9/82* (2006.01)

(21) Numéro de dépôt: **04018886.4**

(22) Date de dépôt: **10.08.2004**

(54) **Procédé d' initialisation d' un volet roulant motorisé**

Verfahren zur Initialisierung eines motorisierten Rolladens

Method for initialising a motorized roller shutter

(84) Etats contractants désignés:
**AT BE BG CH CY CZ DE DK EE ES FI FR GB GR HU IE IT LI LU MC NL PL PT RO SE SI SK TR**

(30) Priorité: **19.08.2003 FR 0310029**

(43) Date de publication de la demande:
**23.02.2005 Bulletin 2005/08**

(73) Titulaire: **Somfy SAS**
**74300 Cluses (FR)**

(72) Inventeur: **Bruno, Serge**
**74460 Marnaz (FR)**

(74) Mandataire: **Bugnion Genève**
**Bugnion S.A.**
**Conseils en Propriété Industrielle**
**Case Postale 375**
**1211 Genève 12 (CH)**

(56) Documents cités:
**EP-A- 0 426 577**    **EP-A- 1 122 404**
**US-A- 5 270 932**    **US-A- 5 449 987**

**Description**

L'invention se rapporte à un procédé d'initialisation pour la commande du déplacement d'un écran destiné à se déplacer entre deux positions extrêmes et dont une unité de commande comprend une horloge, une mémoire et une unité logique de traitement et pilote un actionneur entraînant l'écran. L'invention concerne également un procédé de commande du déplacement d'un écran initialisé par le procédé d'initialisation et un dispositif pour la mise en oeuvre de ces procédés.

Il est courant de disposer des volets roulants au niveau des ouvertures des habitations, ayant des fonctions de protection solaire, d'assombrissement et de sécurité contre les intrusions.

L'installation et le contrôle du mouvement de ces volets roulants sont assez complexes et requièrent les services d'une personne qualifiée.

Les procédures d'installation visent à définir et éventuellement à mémoriser les positions extrêmes haute et basse au niveau desquelles le volet roulant doit, en fonctionnement, automatiquement arrêter sa course.

Les positions extrêmes haute et basse, ou fins de course, peuvent être détectées par exemple par des capteurs de position, par comptage de la position du volet (par roue codeuse par exemple), par lecture du courant en valeur absolue, par calcul de temporisation ou par une détection de surcouple combinée avec une butée.

Quelle que soit la méthode utilisée, l'intérêt est de conserver un positionnement précis dans le temps et d'éviter de provoquer des contraintes dans l'élément mobile de l'écran et dans la chaîne cinématique permettant son entraînement.

Le brevet EP 0 574 637 décrit un procédé de commande d'un volet roulant basé sur les temps de parcours. L'initialisation des temps de parcours maximaux fait suite à une action de l'utilisateur : le volet effectue alors un déplacement dans un sens, puis dans l'autre, entre les positions extrêmes, et les durées de parcours mesurées sont mises en mémoire.

Ce procédé est basé sur l'hypothèse que le déplacement du volet obéit à une loi bien établie de proportionnalité. Cependant, dans la pratique, la loi position du volet/temps d'activation de l'actionneur est complexe, et le procédé proposé ne permet donc pas un arrêt précis au niveau des positions extrêmes. Une procédure de réinitialisation est par conséquent prévue après un nombre défini de déplacement du volet pour rattraper les dérives. Une loi plus complexe entre le déplacement et le temps est envisagée mais non détaillée.

La demande de brevet EP 1 122 404 propose un procédé de commande de volet roulant dans lequel, le temps de montée et le temps de descente du volet sont mesurés, dans une phase d'initialisation, par détection de surcouple à l'arrivée en butée. A chacun de ces temps mesurés est soustraite une quantité déterminée, et le résultat est mis en mémoire. Ainsi, le mouvement du volet roulant est contrôlé en fonction du temps d'activation et il n'atteint en principe plus les butées haute et basse. Pour tenir compte des différences de vitesse à la montée et à la descente, le procédé propose de calculer mathématiquement, au moins à chaque arrêt, par une règle de trois, la valeur qui devrait figurer dans le compteur correspondant au mouvement inverse pour une position identique du volet. La détection de surcouple active en permanence permet de détecter des obstacles ou des dérives trop importantes. Les dérives et arrêts sur obstacle susceptibles de dérégler le système sont traités par l'affectation au compteur de la valeur maximale mémorisée. Dans ces cas, le système se recale par un arrêt dû au surcouple du moteur.

L'utilisation d'une règle de trois implique que la vitesse est constante tout au long du déplacement. En réalité, que ce soit pour un volet roulant ou une porte de garage, les valeurs de couple suivent une courbe non linéaire ce qui entraîne des variations de vitesse au long de la course. Les résultats de la règle de trois ne donnent alors que des résultats imprécis et ce calcul entraîne des dérives importantes.

Il n'est fait dans ces documents aucune mention des variations de température ou de fréquence de l'alimentation qui viennent agir sur la vitesse de l'actionneur. Si la vitesse varie, les temporisations qui régissent le mouvement sont faussées et ce sont en fin de compte les détecteurs de butées qui permettent de commander les arrêts du mouvement. Par conséquent, bien que le but du procédé soit de réduire les occasions de provoquer des contraintes sur le volet ou sa chaîne cinématique, ces évènements sont encore fréquents.

Le but de l'invention est de fournir un procédé permettant de pallier aux problèmes cités et améliorant les procédés connus de l'art antérieur. L'invention propose en particulier un procédé d'initialisation permettant la commande ultérieure d'un écran en minimisant les dérives et les occasions de créer des contraintes sur l'écran et sur sa chaîne cinématique d'entraînement. Ce procédé peut être appliqué à des dispositifs dont les caractéristiques physiques sont diverses.

Le procédé d'initialisation selon l'invention est caractérisé :

- en ce que la course de l'écran entre les deux positions extrêmes est divisée en différents segments et
- en ce qu'à chaque extrémité de segment sont affectées une durée de déplacement de l'écran dans un premier sens entre cette extrémité de segment et une première position de référence et une durée de déplacement de l'écran dans un second sens entre cette extrémité de segment et une deuxième position de référence.

Ce découpage de la course en différents segments permet de modéliser de manière simple et précise le couple qu'exerce l'écran sur l'actionneur le long de sa course.

Différents modes d'exécution du procédé d'initialisation sont définis par les revendications dépendantes 2 à 7.

Le procédé de commande du déplacement d'un écran initialisé par le procédé précédent est caractérisé en ce que la position de l'écran est déterminée par les durées de déplacement la séparant des positions de référence, celles-ci étant calculées en fonction de la dernière position connue, du temps et du sens de déplacement depuis cette dernière position et des durées de déplacement associées aux extrémités des segments.

L'actionneur peut être commandé à vitesse ralentie à l'approche des positions extrêmes de l'écran.

Le dispositif d'écran selon l'invention est caractérisé en ce que l'unité logique de traitement comprend des moyens logiciels pour la mise en oeuvre des procédés précédents.

Le dispositif comprend avantageusement une alimentation délivrant une tension continue stable et l'actionneur présente avantageusement une résistance interne peu sensible à la température.

Le dessin annexé illustre, à titre d'exemple, un mode d'exécution du procédé selon l'invention.

La figure 1 est un schéma illustrant, le découpage de la course de l'élément mobile en différents segments.

La figure 2 est un schéma d'un dispositif d'écran motorisé permettant la mise en oeuvre du procédé selon l'invention.

La figure 3 représente de manière graphique les relations entre les durées d'activation de l'actionneur et la position d'un écran, dans l'un et l'autre sens de mouvement.

La figure 4 est un graphique représentant l'écart entre les durées d'activation représentées sur la figure précédente et la durée moyenne de parcours, en fonction de la position de l'écran.

La figure 5 est un graphique représentant les variations du couple exercé par l'écran sur le moteur de l'actionneur en fonction de sa position.

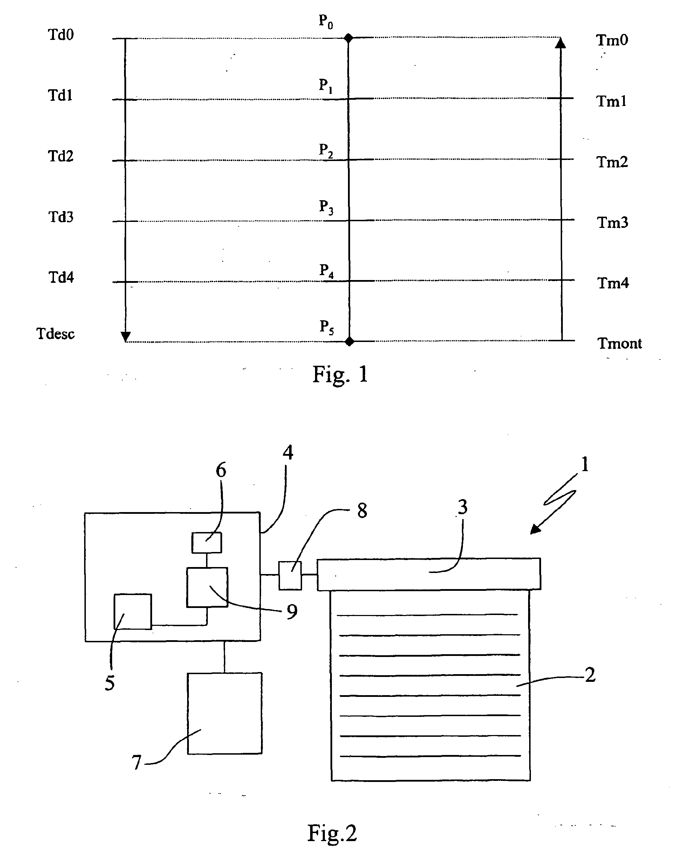

Le procédé selon l'invention s'applique à un dispositif 1 d'écran motorisé représenté à la figure 2 et comprenant principalement un élément mobile 2 destiné à être déplacé entre deux positions extrêmes par un actionneur électrique 3. Le dispositif d'écran 1 peut par exemple consister en un volet roulant ou en une porte de garage.

L'actionneur 3 est piloté par une unité de commande 4 comprenant une unité logique de traitement 9, une mémoire 5 et une horloge 6. L'actionneur 3 comprend de préférence un moteur à courant continu alimenté par une alimentation 7 délivrant une tension stable (par exemple 24 Volts plus ou moins 1 Volt). Un moteur à résistance interne faible (par exemple inférieure à 14 Ohms et de préférence inférieure à 5 Ohms) couplé à une alimentation stable en tension quel que soit son environnement permet de réaliser un dispositif d'entraînement d'élément mobile dont la vitesse de manoeuvre est peu sensible aux variations de température. La maîtrise de la vitesse de rotation permet une commande précise de l'élément mobile.

Le dispositif comprend également des moyens 8 de détection de fin de course fonctionnant préférentiellement par mesure du couple fourni par l'actionneur.

Une commande de déplacement de l'élément mobile d'un point à un autre est traduit par une durée d'activation de l'actionneur.

Dans une procédure préalable au procédé selon l'invention, on mesure avec précision le temps de descente Tdesc et du temps de montée Tmont du volet. La différence entre le temps de descente du volet Tdesc et le temps de montée du volet Tmont est due à la charge qu'exerce l'élément mobile sur l'actionneur. Dans un sens, la charge est menante, alors qu'elle s'oppose au mouvement dans le deuxième sens.

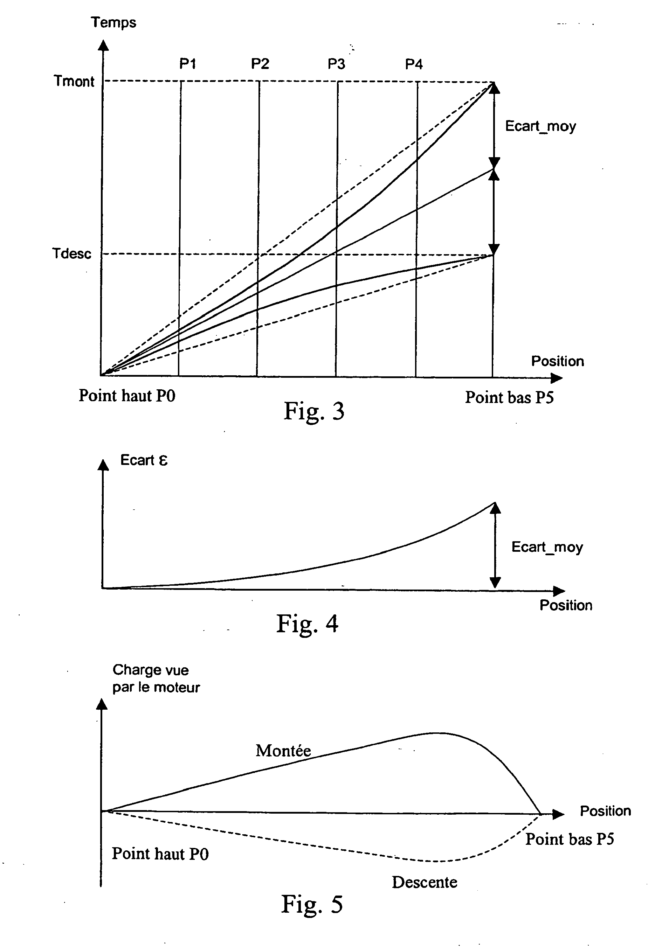

Cette simple différence entre Tdesc et Tmont ne permet pas par contre de tenir compte des évolutions de la charge au cours du déplacement d'une butée à l'autre. En effet, la charge entraînée par l'actionneur évolue au cours du déplacement. L'actionneur est constitué d'un moteur et d'un réducteur partiellement irréversible. La charge vue par le moteur tient compte de la différence des rendements du réducteur ; celle-ci est représentée à la figure 5. Par exemple, pour un volet à lames empilables, l'effort maximal à la montée est obtenu lorsque la lame la plus basse est soulevée (charge maximale), une fois les lames désempilées. L'effort créé par la charge est au contraire nul ou faible dans les positions totalement enroulé ou totalement déroulé du volet.

La vitesse de manoeuvre de l'écran n'est donc pas constante au cours de la course. De ce fait, la courbe temps d'activation/position de l'écran n'est pas linéaire, comme représenté à la figure 3. Pour plus de facilité de lecture, les écarts sont exagérés.

La courbe supérieure de cette figure représente le temps nécessaire pour monter depuis une position P jusqu'à la position haute $P_0$ et la courbe inférieure représente le temps nécessaire pour descendre depuis la position haute $P_0$ jusqu'à une position P.

On constate donc que la connaissance précise de la position du volet à partir de la seule connaissance de temps de parcours nécessite de tenir compte de ces non-linéarités. Or, les seules valeurs mesurables de manière simple sont Tmont et Tdesc.

Le procédé d'initialisation selon l'invention consiste donc tout d'abord à reconstruire des courbes théoriques des temps d'activation aussi proches que possible des courbes réelles.

A cet effet, on divise arbitrairement la course physique de l'écran dont les limites sont définies par ses positions extrêmes haute et basse. Cette étape est réalisée grâce à un algorithme exécuté après que l'écran est venu en contact avec ses butées, ce qui a permis de mesurer Tmont et Tdesc. Le découpage en segments correspond à un découpage en points physiques notés $P_0$ à $P_5$ sur la figure 1. Le point $P_0$ correspond à la position extrême supérieure de l'écran et le point $P_5$ à la position

extrême inférieure de l'écran. Les points $P_1$ à $P_4$ correspondent à des positions intermédiaires. Ces points sont identiques pour la montée et la descente.

A chaque point $P_x$, on associe deux durées. La première durée $Tm_x$ étant la durée de déplacement (montée) entre ce point $P_x$ et une première position de référence dans un premier sens de mouvement et la deuxième durée $Td_x$ étant la durée entre le point $P_x$ et une deuxième position de référence dans un deuxième sens de mouvement. Ces durées sont calculées à partir des seules valeurs de Tmont et Tdesc et d'un algorithme tenant compte de la charge théorique.

En cours de fonctionnement, le dispositif utilise un compteur de durée de mouvement dans le premier sens de mouvement, et un compteur de durée de mouvement dans le deuxième sens de mouvement pour repérer sa position par rapport à deux positions de référence. Par exemple, les deux positions de référence sont confondues et il s'agit de la position extrême supérieure. Les contenus des compteurs sont alors notés tm (temps nécessaire à aller depuis la position courante jusqu'à la position haute) et td (temps nécessaire à aller depuis la position haute jusqu'à la position courante).

Pour un arrêt ou un passage dans une position intermédiaire entre les deux positions extrêmes, la valeur du compteur dans le sens du mouvement est comparée avec les valeurs limites de temps de chaque segment, dans le sens du mouvement, pour déterminer dans quel segment la position intermédiaire se trouve, et à quel niveau on se situe à l'intérieur du segment.

Le niveau relatif à l'intérieur du segment est déterminé à partir du temps parcouru dans le segment donné et d'une règle de proportionnalité en fonction des durées associées aux extrémités du segment dans ce sens du mouvement.

La connaissance du niveau relatif permet de déterminer le temps qui serait nécessaire, dans le sens inverse de mouvement, pour rejoindre l'extrémité du segment la plus proche de la position de référence correspondant à ce sens inverse de mouvement.

Cette durée, ajoutée à la valeur associée à cette extrémité dans le sens inverse de mouvement, permet de mettre à jour le compteur représentatif de la position dans le sens inverse de mouvement.

Un obstacle est détecté par un déplacement plus long que la durée maximale dans ce sens de déplacement ou par un surcouple.

Dans un mode de réalisation préféré, dans les premiers segments en haut et en bas de la course de l'écran, ou zones d'accostage, l'actionneur passe automatiquement en vitesse lente, de manière à venir en butée avec un couple réduit et éviter d'exercer des contraintes sur l'écran ou sur sa chaîne cinématique d'entraînement. La détection de surcouple peut alors être fixée à une limite plus faible que si l'actionneur arrive en butée à vitesse rapide. Ainsi, la détection d'obstacle est plus fine et évite également d'exercer des contraintes.

Le calcul dans des compteurs des durées séparant la position de l'écran des positions extrêmes de référence dans les deux sens de mouvement peut être effectué à chaque arrêt de l'actionneur dans une position intermédiaire au cours d'un mouvement. De préférence, cependant, ce calcul est effectué régulièrement au cours du déplacement de l'écran. Ainsi, il est possible de détecter l'entrée dans une des zones d'accostage et de réduire alors la vitesse de rotation de l'actionneur.

Les positions de référence peuvent être les positions extrêmes inférieure et/ou supérieure. L'important est que le repérage nécessite l'utilisation des deux sens de mouvement. Dans la forme de réalisation préférée, la position extrême haute est utilisée.

Les procédés d'initialisation et d'utilisation sont maintenant illustrés dans le cas d'un volet roulant à lames empilables.

Dans cet exemple, comme cela apparaît sur la figure 4, les écarts des durées par rapport à la durée d'activation moyenne suivent une loi sensiblement de type exponentiel.

Pour reconstruire les courbes des temps d'activation, on prendra une correction exponentielle apportée à la durée moyenne de déplacement. Une loi de type exponentiel est facilement réalisée à partir de la somme des n premiers nombres entiers, où n est le rang du segment considéré.

En conséquence, l'algorithme de découpage de la course peut être le suivant :

On connaît la durée de parcours de la course lors de la montée Tmont et la durée de parcours de la course lors de la descente Tdesc par un procédé d'initialisation.

La position de référence choisie est la position extrême supérieure dans les deux sens de mouvement.

Une durée moyenne de parcours $Tmoy$ est définie par :

$$Tmoy = \frac{Tmont + Tdesc}{2}$$

Un écart moyen $Ecart\_moy$ est défini par

$$Ecart\_moy = \frac{Tmont - Tdesc}{2}$$

Soit $p$ un nombre choisi de segments de même longueur.

On définit a tel que :

$$a = \frac{Ecart\_moy}{\sum_{n=1}^{p} n}$$

La durée $Td_x$ pour atteindre le point $P_x$ depuis

la position extrême haute est définie par :

$$\left\{ Td_x \right\}_{x=0 \to p} = \left\{ \frac{Tmoy}{p} \times x - a \times \sum_{i=0}^{x} i \right\}_{x=0 \to p}$$

La durée $\varepsilon_{x,x+1}$ séparant les points $P_x$ et $P_{x+1}$ dans le sens de la descente, est définie comme suit :

$$\left\{ \varepsilon_{x,x+1} \right\} = \left\{ Td_{x+1} - Td_x \right\}_{x=0 \to p}$$

De même, la durée $Tm_x$ pour atteindre la position extrême haute depuis le point $P_x$ est définie par :

$$\left\{ Tm_x \right\}_{x=0 \to p} = \left\{ \frac{Tmoy}{p} \times x + a \times \sum_{i=0}^{x} i \right\}_{x=0 \to p}$$

La durée $\varepsilon_{x,x+1}$ séparant les points $P_x$ et $P_{x+1}$ dans le sens de la montée est définie comme suit :

$$\left\{ \varepsilon_{x,x+1} \right\} = \left\{ Tm_{x+1} - Tm_x \right\}_{x=0 \to p}$$

Suivant le dispositif d'écran commandé, on pourra utiliser d'autres algorithmes de calcul, ou tables, des durées de déplacement séparant les extrémités des segments, de manière à tenir compte de la courbe de couple qui diffère d'un type d'écran à un autre.

Une fois le procédé d'initialisation définissant les différents segments exécuté, la position de l'écran est déterminée par la durée séparant l'écran de la position extrême supérieure dans le premier sens de mouvement et par la durée séparant l'écran de la position extrême supérieure dans le deuxième sens de mouvement.

Par exemple, en partant de la position extrême haute, après avoir activé l'actionneur dans le sens de la descente pendant un temps $td1$, on détermine dans quel segment l'écran est arrêté. En supposant que les points limites du segment où il est arrêté sont $Td2$ et $Td3$ dans le sens de la descente et $Tm2$ et $Tm3$ dans le sens de la montée.

Le temps $tm1$ pour remonter le volet jusqu'au point haut est calculé comme suit :

$$tm1 = \left[ \frac{td1 - Td2}{Td3 - Td2} \times (Tm3 - Tm2) \right] + Tm2$$

A l'arrêt de l'actionneur après un temps $td1$, le volet est à $td1$ de sa position extrême haute dans le sens de la descente et à $tm1$ de sa position extrême haute dans le sens de la montée.

Le volet est situé également à $Tdesc-td1$ de la position extrême inférieure dans le sens de la descente.

En supposant que l'actionneur est ensuite activé pendant un temps $tm2$ vers le haut, et que, par conséquent, l'écran est amené dans un nouveau segment dont les limites sont $Td1$ et $Td2$ dans le sens de la descente et $Tm1$ et $Tm2$ dans le sens de la montée.

Le nouveau temps restant pour remonter l'écran est : $tm3 = tm1 - tm2$

L'écran est alors également à $td3$ de sa position extrême haute,

$$td3 = \left[ \left( \frac{tm3 - Tm1}{Tm2 - Tm1} \right) \times (Td2 - Td1) \right] + Td1 \, ,$$

soit à $Tdesc-td3$ de sa position extrême basse dans le sens de la descente.

Le calcul de la position de l'écran peut également être réalisé à partir des durées $\varepsilon_{x,x+1}$ séparant les points $P_x$ et $P_{x+1}$.

**Revendications**

1. Procédé d'initialisation pour la commande du déplacement d'un écran (2) destiné à se déplacer entre deux positions extrêmes et dont une unité de commande (4) comprend une horloge (6), une mémoire (5) et une unité logique de traitement (9) et pilote un actionneur (3) entraînant l'écran (2), **caractérisé**

   - **en ce que** la course de l'écran entre les deux positions extrêmes est divisée en différents segments et
   - **en ce qu'**à chaque extrémité de segment sont affectées une durée de déplacement de l'écran dans un premier sens entre cette extrémité de segment et une première position de référence et une durée de déplacement de l'écran dans un second sens entre cette extrémité de segment et une deuxième position de référence.

2. Procédé d'initialisation selon la revendication 1, **caractérisé en ce que** les positions de référence sont les positions extrêmes inférieure et supérieure.

3. Procédé d'initialisation selon la revendication 1, **caractérisé en ce que** la première position de référence et la deuxième position de référence sont confondues.

4. Procédé d'initialisation selon l'une des revendications 1 à 3, **caractérisé en ce que** les durées de déplacements sont affectées aux extrémités de segments selon un algorithme de calcul tenant compte d'une courbe théorique de la charge en fonction de la position de l'écran.

5. Procédé d'initialisation selon l'une des revendications 1 à 3, **caractérisé en ce que** les durées de déplacements sont affectées aux extrémités de segments selon un algorithme de calcul tenant compte d'une courbe de la charge en fonction de la position de l'écran définie par apprentissage.

6. Procédé d'initialisation selon l'une des revendications 1 à 5, **caractérisé en ce que** les segments sont sensiblement de même longueur.

7. Procédé d'initialisation selon l'une des revendications 1 à 6, **caractérisé en ce que** les segments sont définis tels que la variation de charge de l'écran est sensiblement constante sur chacun des segments.

8. Procédé de commande du déplacement d'un écran (2) destiné à se déplacer entre deux positions extrêmes et dont une unité de commande (4) comprend une horloge (6), une mémoire (5) et une unité logique de traitement (9) et pilote un actionneur (3) entraînant l'écran (2), **caractérisé**

   - **en ce qu**'il comprend une étape d'initialisation selon l'une des revendications précédentes et
   - **en ce qu**'il comprend une étape de commande par laquelle la position de l'écran est déterminée par les durées de déplacement la séparant des positions de référence, celles-ci étant calculées en fonction de la dernière position connue, du temps et du sens de déplacement depuis cette dernière position et des durées de déplacement associées aux extrémités des segments.

9. Procédé de commande selon la revendication 8, **caractérisé en ce que** l'actionneur est commandé à vitesse ralentie à l'approche des positions extrêmes de l'écran.

10. Dispositif (1) d'écran destiné à se déplacer entre deux positions extrêmes, dont une unité de commande (4) comprend une horloge (6), une mémoire (5) et une unité logique de traitement (9) et pilote un actionneur (3) entraînant l'écran (2), **caractérisé en ce que** l'unité logique de traitement comprend des moyens logiciels pour la mise en oeuvre du procédé selon l'une des revendications 1 à 9.

11. Dispositif (1) d'écran selon la revendication 10, **caractérisé en ce qu'**il comprend une alimentation (7) délivrant une tension continue stable et **en ce que** l'actionneur (3) présente un moteur dont la résistance interne est Inférieure à 14 ohms.

**Claims**

1. An initialization process, for the control of the movement of a screen (2) designed to move between two extreme positions, a control unit (4) of which comprises a clock (6), a memory (5) and a logic processing unit (9) and controls an actuator (3) driving the screen (2), **characterised**

   - **in that** the travel of the screen between the two extreme positions is divided into different segments and
   - **in that** each segment end is allocated a duration of screen movement in a first direction between this segment end and a first reference position and a duration of screen movement in a second direction between this segment end and a second reference position.

2. The initialization process as claimed in claim 1, **characterised in that** the reference positions are the lower and upper extreme positions.

3. The initialization process as claimed in claim 1, **characterised in that** the first reference position and the second reference position coincide.

4. The initialization process as claimed in one of claims 1 to 3, **characterised in that** the movement durations are allocated to the segment ends by a computation algorithm that includes a theoretical curve of the load as a function of the position of the screen.

5. The initialization process as claimed in one of claims 1 to 3, **characterised in that** the movement durations are allocated to the segment ends by a computation algorithm that includes a curve of the load as a function of the position of the screen defined by learning.

6. The initialization process as claimed in one of claims 1 to 5, **characterised in that** the segments are of approximately the same length.

7. The initialization process as claimed in one of claims 1 to 6, **characterised in that** the segments are so defined that the variation of the load of the screen is approximately constant on each of the segments.

8. A process for controlling the movement of a screen designed to move between two extreme positions, a control unit (4) of which comprises a clock (6), a memory (5) and a logic processing unit (9) and controls an actuator (3) driving the screen (2), **characterised**

- **in that** it comprises an initialization step according to one of the preceding claims, and
- **in that** it comprises a step by which the position of the screen is determined by the movement durations separating it from the reference positions, the latter being calculated from the last known position, from the time and from the direction of movement from this last position and from the movement durations associated with the ends of the segments.

9. The control process as claimed in claim 8, **characterised in that** the actuator is operated at reduced speed on the approach to the extreme positions of the screen.

10. A screen device (1) designed to move between two extreme positions, a control unit (4) of which comprises a clock (6), a memory (5) and a logic processing unit (9) and controls an actuator (3) driving the screen (2), **characterised in that** the logic processing unit comprises software means for implementing the process as claimed in one of claims 1 to 9.

11. The screen device (1) as claimed in claim 10, **characterised in that** it comprises a power supply (7) delivering a stable direct-current voltage and **in that** the actuator (3) has a motor the internal resistance of which is less than 14 ohms.

**Patentansprüche**

1. Verfahren zur Initialisierung der Steuerung der Verschiebung eines beweglichen Schirms (2), der zwischen zwei Endstellungen bewegbar ist und bei dem ein Steuergerät (4) einen Zeitgeber (6), einen Speicher (5) und eine Logik-Verarbeitungseinheit (9) aufweist und einen Antrieb (3) steuert, der den Schirm (2) antreibt, **dadurch gekennzeichnet,**

   - **dass** die Weglänge des Schirms zwischen den beiden Endstellungen in mehrere Abschnitte eingeteilt wird, und
   - **dass** jeder Endstelle eines Abschnitts eine Laufzeit des Schirms in einer ersten Richtung von dieser Abschnitt-Endstelle bis zu einer ersten Bezugsposition sowie eine Laufzeit des Schirms in einer zweiten Richtung von dieser Abschnitt-Endstelle bis zu einer zweiten Bezugsposition zugeordnet werden.

2. Verfahren zur Initialisierung nach Anspruch 1, **dadurch gekennzeichnet, dass** die beiden Bezugspositionen die untere Endstellung und die obere Endstellung sind.

3. Verfahren zur Initialisierung nach Anspruch 1, **da-**

**durch gekennzeichnet, dass** die erste Bezugsposition und die zweite Bezugsposition zusammenfallen.

4. Verfahren zur Initialisierung nach einem der Ansprüche 1 bis 3, **dadurch gekennzeichnet, dass** die Laufzeiten den Endstellen der Abschnitte nach einem Berechnungs-Algorithmus zugeordnet werden, der eine theoretische Kurve der Belastung in Abhängigkeit von der Position des Schirms berücksichtigt.

5. Verfahren zur Initialisierung nach einem der Ansprüche 1 bis 3, **dadurch gekennzeichnet, dass** die Laufzeiten den Endstellen der Abschnitte nach einem Berechnungs-Algorithmus zugeordnet werden, der eine Belastungskurve in Abhängigkeit von der Position des Schirmes berücksichtigt, welche durch einen Lernvorgang definiert wird.

6. Verfahren zur Initialisierung nach einem der Ansprüche 1 bis 5, **dadurch gekennzeichnet, dass** die Abschnitte jeweils praktisch die gleiche Länge haben.

7. Verfahren zur Initialisierung nach einem der Ansprüche 1 bis 6, **dadurch gekennzeichnet, dass** die Abschnitte derart definiert sind, dass die Veränderung der Belastung des Schirms über jeden Abschnitt praktisch konstant bleibt.

8. Verfahren zur Steuerung der Verschiebung eines beweglichen Schirms (2), der zwischen zwei Endpositionen bewegbar ist und bei dem ein Steuergerät (4) einen Zeitgeber (6), einen Speicher (5) und eine Logik-Verarbeitungseinheit (9) aufweist und einen Antrieb (3) steuert, der den Schirm (2) antreibt, **dadurch gekennzeichnet,**

   - **dass** das Verfahren einen Initialisierungsschritt gemäss einem der vorstehenden Ansprüche enthält, und
   - **dass** es einen Steuerungsschritt enthält, durch welchen die Position des Schirms mittels der Laufzeiten bestimmt wird, die den Schirm von den Bezugspositionen trennen, wobei letztere in Abhängigkeit von der zuletzt bekannten Position, der Zeit und der Richtung der Verschiebung des Schirms von dieser zuletzt bekannten Position und den Laufzeiten, die den Endstellen der Abschnitte zugeordnet sind, berechnet werden.

9. Verfahren zur Steuerung nach Anspruch 8, **dadurch gekennzeichnet, dass** der Antrieb mit verminderter Geschwindigkeit gesteuert wird, wenn sich der Schirm einer seiner Endstellungen nähert.

10. Abschirmvorrichtung (1), die dazu eingerichtet ist, sich zwischen zwei Endstellungen zu bewegen, und bei der ein Steuergerät (4) einen Zeitgeber (6), einen Speicher (5) und eine Logik-Verarbeitungseinheit (9) aufweist und einen Antrieb (3) steuert, welcher den Schirm (2) antreibt, **dadurch gekennzeichnet, dass** die Logik-Verarbeitungseinheit logische Mittel zur Ausführung des Verfahrens nach einem der Ansprüche 1 bis 9 aufweist.

**11.** Abschirmvorrichtung (1) nach Anspruch 10, **dadurch gekennzeichnet, dass** sie eine Energieversorgung (7) aufweist, welche eine stabilisierte Gleichspannung abgibt, und dass der Antrieb (3) einen Motor aufweist, dessen Innenwiderstand kleiner als 14 Ohm ist.

Fig. 1

Fig.2

Temps

Tmont

P1    P2    P3    P4

Ecart_moy

Tdesc

Position

Point haut P0

Point bas P5

## Fig. 3

Ecart ε

Ecart_moy

Position

## Fig. 4

Charge vue
par le moteur

Montée

Position

Point haut P0

Point bas P5

Descente

## Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0574637 A

- EP 1122404 A